# EUROPEAN PATENT SPECIFICATION

(11) **EP 3 362 719 B1**
(45) Date of publication and mention of the grant of the patent: **19.02.2020**
(21) Application number: 16788855.1
(22) Date of filing: 12.10.2016
(51) Int. Cl.: F16K 31/126, F16K 47/08, G05D 16/06

(54) **HIGH CAPACITY LINEAR VALVE CAGE**
LINEARVENTILKÄFIG MIT HOHER KAPAZITÄT
CAGE DE SOUPAPE LINÉAIRE À CAPACITÉ ÉLEVÉE

(30) Priority: 12.10.2015 US 201562240089 P; 08.12.2015 US 201514962471
(43) Date of publication of application: 22.08.2018
(73) Proprietor: Emerson Process Management Regulator Technologies, Inc., McKinney, TX 75070 (US)
(72) Inventor: REYNOLDS, Matthew, David, McKinney, Texas 75070 (US); MICHNEVITZ, Mark, Alexander, Frisco, TX 75033 (US); BUFORD, Kelly, Jake, The Colony, TX 75056 (US); VASQUEZ, Ernesto, Dallas, TX 75214 (US)
(74) Representative: Petraz, Gilberto Luigi
(86) International application number: PCT/US2016/056494
(87) International publication number: WO 2017/066221

(56) References cited:
- EP-A1- 3 187 760
- WO-A1-2011/085974
- WO-A1-2011/088548
- CN-U- 201 836 526
- FR-A1- 2 306 390
- JP-A- S6 030 875
- JP-A- S6 136 567
- US-A- 3 157 200
- US-A1- 2007 240 774
- US-A1- 2015 108 379

## Description

### FIELD OF THE DISCLOSURE

This disclosure relates generally to fluid regulators/control valves and, more particularly, linear valve cages for fluid regulators/control valves.

### BACKGROUND

In typical fluid regulators/control valves, a valve cage may provide guidance for a valve plug as the valve plug moves from a closed position in which the valve plug sealingly engages a valve seat to an open position in which the valve plug is disposed away from the valve seat. When the valve is in the open position, fluid flows from a valve inlet, passes through a passage between the valve seat and the valve plug, passes through the valve cage, and exits through a valve outlet. In addition to guiding the valve plug, a valve cage can also be used for additional functions, such as controlling the volume of fluid flow as the valve plug retracts, noise reduction, etc. Known valve cages are described for example in the documents CN-U-201836526 and FR-A-2306390. Another known cage valve is described for example in the document JP S6136567.

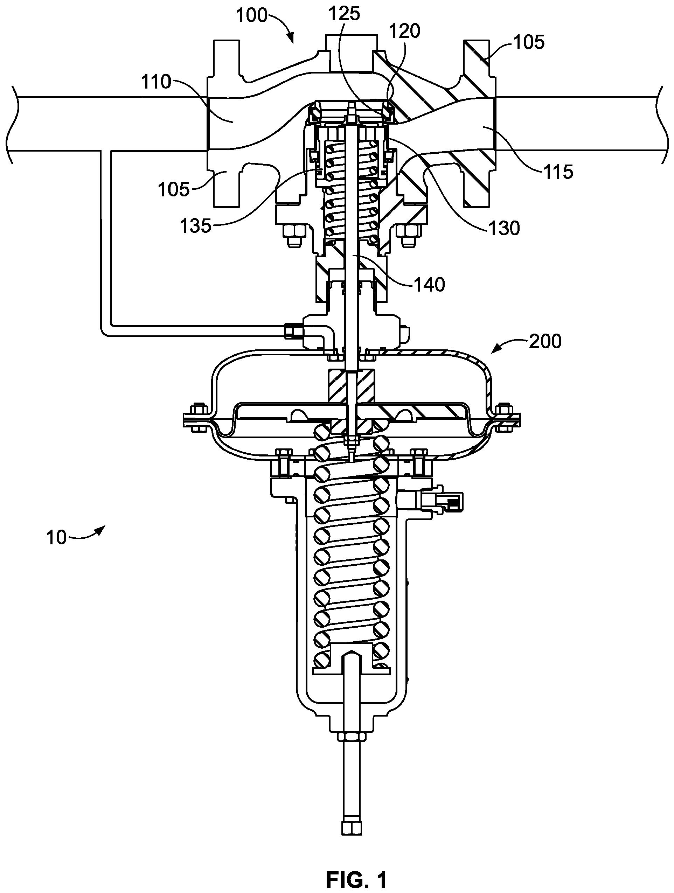

Referring to Fig. 1, a typical fluid regulator 10, such as a Fisher® Type MR108 Direct-Operated Backpressure Regulator, is shown and generally includes a standard control valve 100 and a standard actuator 200. Control valve 100 generally includes a valve body 105 having an inlet 110 and an outlet 115 and a passageway 120 disposed between inlet 110 and outlet 115. A valve seat 125 is disposed in passageway 120 between inlet 110 and outlet 115 and a valve cage 130 is disposed within valve body 105 adjacent valve seat 125. A fluid control member, such as a valve plug 135, is positioned within valve body 105 and is disposed within valve cage 130. Valve plug 135 interacts with valve seat 125 to control fluid flow through valve body 105, such that valve plug 135 sealingly engages valve seat 125 in a closed position and is spaced away from valve seat 125 in an open position. A stem 140 is connected to valve plug 135 at one end and to actuator 200 at another end. Actuator 200 controls movement of valve plug 135 within valve cage 130, which is positioned adjacent valve seat 125 and proximate valve plug 135 to provide guidance for valve plug 135.

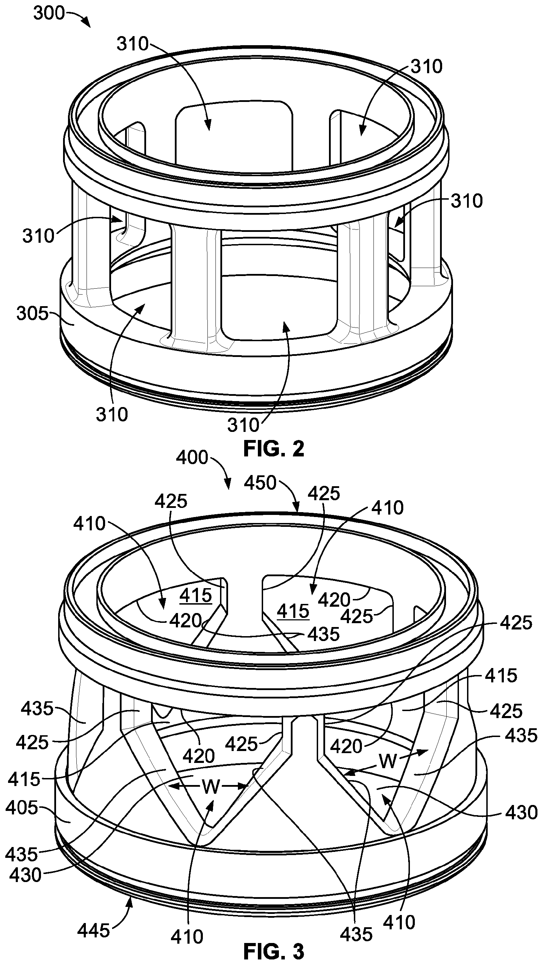

In certain applications, valve cage 130 of control valve 100 can be a high flow or quick opening cage, such as high flow valve cage 300 shown in Fig. 2. For example, a high flow valve cage 300 could be used when control valve 100 operates at both low and high flow conditions with a large range of variability. These applications can require valve stability at initial opening, but increased capacity to accommodate flow requirements. Valve cage 300 is cylindrical and has a circumferential wall 305 that allows fluid flow into valve cage 300. A plurality of passages 310 are formed through circumferential wall 305 to allow fluid flow through circumferential wall 305 and are spaced apart around circumferential wall 305. In high flow valve cage 300, passages are generally square or rectangular and allow a high initial fluid flow through passages as soon as a valve plug moves from the closed position to a position that opens passages 310. Unfortunately, one drawback of high flow valve cage 300 is that the high initial fluid flow makes high flow valve cage 300 unstable since there is a large initial flow of fluid that surges through valve cage 300. This can cause cavitation and other undesirable fluid flow issues.

In other applications, valve cage 130 of control valve 100 can be a low flow cage, such as linear valve cage 400 shown in Fig. 3. For example, a linear valve cage 400 could be used when control valve 100 operates at low flow conditions, therefore increasing valve stability at the initial opening of the valve. Valve cage 400 is cylindrical and has a circumferential wall 405 that allows fluid flow into valve cage 400. A plurality of passages 410 are formed through circumferential wall 405 to allow fluid flow through circumferential wall 405 and are spaced apart around circumferential wall 405. In linear valve cage 400, passages 410 have an upper portion 415 and a lower portion 430. Upper portion 415 of passages 410 is defined by a top wall 420 and a pair of opposing, parallel, generally vertical sides walls 425, such that the upper portion 415 is generally rectangular, much like passages 310 in high flow valve cage 300 described above. Lower portion 430 of passages 410 is defined by first and second lower walls 435, 440, which are non-parallel and are angled toward each other such that the distance W between first and second lower walls 435, 440 decreases as the distance from upper portion 415 increases. In other words, the distance W between first and second lower walls 435, 440 is smallest adjacent a bottom 445 of linear valve cage 400 and increases as first and second lower walls 435, 440 extend toward side walls 425 or toward a top 450 of linear valve cage 400. Because of the changing distance W between first and second lower walls 435, 440 of lower portion 430 of passages 410, a smaller initial fluid flow is allowed to pass through passages 410 as valve plug 135 moves from the closed position to a position that opens passages 410. As valve plug 135 continues to move further and a greater portion of passages 410 is opened, the changing distance W between first and second lower walls 435, 440 of lower portion 430 allows greater fluid flow through passages 410. This lower initial fluid flow and gradual increase of fluid flow as valve plug 135 moves provides a more stable fluid flow through linear valve cage 400, rather than the initial high volume rush of fluid encountered by high flow valve cage 300. However, one drawback of linear valve cage 400 is that in certain systems, the initial fluid flow through passages 410, which provides the stable fluid flow, is too small and allows pressure to build up within control valve 100. This pressure build up can have undesirable affects, such as setting off safety pressure relief valves in the system due to the increased pressure, before valve plug 135 has moved far enough to allow a greater fluid flow through passages 410.

### BRIEF SUMMARY OF THE DISCLOSURE

The invention is defined by a cage for a control valve, the cage comprising: a circumferential wall having an inner surface and an outer surface; a plurality of first passages formed through the circumferential wall and extending between the inner surface and the outer surface, each of the plurality of first passages including an upper portion and a lower portion, wherein the upper portion of each of the plurality of first passages is rectangular and the lower portion is tapered in a direction away from the upper portion; and a plurality of second passages formed through the circumferential wall and extending between the inner surface and the outer surface, each of the plurality of second passages having a circular shape and including an upper portion and a lower portion, wherein the lower portion of each of the plurality of second passages is tapered in a direction away from the upper portion, one of the plurality of second passages is positioned between each pair of adjacent lower portions of the first passages, characterized in that the entirety of each of the second passages is positioned circumferentially and vertically between adjacent lower portions of the first passages.

In one preferred form, the lower portion of each of the plurality of first passages includes first and second lower walls that are non-parallel and angled toward each other.

In another preferred form, each of the plurality of second passages includes opposing walls and a distance between the opposing walls decreases as the distance from the upper portion increases.

In a further aspect, a control valve includes the cage of the invention, the control valve comprising: a valve body having an inlet and an outlet; a valve seat positioned in a passageway of the valve body between the inlet and the outlet; and a valve plug positioned within the valve body and movable between a closed position, in which the valve plug sealingly engages the valve seat, and an open position, in which the valve plug is spaced away from the valve seat; wherein the valve cage is disposed within the valve body adjacent the valve seat and proximate the valve plug to provide guidance for the valve plug.

In a preferred form, the control valve includes wherein the lower portion of each of the plurality of first passages first and second lower walls that are non-parallel and angled toward each other.

In another preferred form of the control valve, a distance between the first and second lower walls decreases as a distance from the upper portion of the first passages increases such that a greater fluid flow is allowed through the first passages as the valve plug moves further from the valve seat.

In another preferred form of the control valve, each of the plurality of second passages includes opposing walls and a distance between the opposing walls decreases as the distance from the upper portion of the second passages increases such that a greater fluid flow is allowed through the second passages as the valve plug moves further from the valve seat.

In a further aspect, a fluid regulator includes the control valve of the invention, the fluid regulator comprising: an actuator; and the control valve operatively connected to the actuator.

In a preferred form of the fluid regulator, the lower portion of each of the plurality of first passages includes first and second lower walls that are non-parallel and angled toward each other.

In another preferred form of the fluid regulator, a distance between the first and second lower walls decreases as a distance from the upper portion of the first passages increases such that a greater fluid flow is allowed through the first passages as the valve plug moves further from the valve seat.

In another preferred form of the fluid regulator, each of the plurality of second passages includes opposing walls and a distance between the opposing walls decreases as the distance from the upper portion of the second passages increases such that a greater fluid flow is allowed through the second passages as the valve plug moves further from the valve seat.

### BRIEF DESCRIPTION OF THE DRAWINGS

FIG. 1 is a cross-sectional view of an example fluid regulator;
FIG. 2 is a front perspective view of a standard high flow valve cage;
FIG. 3 is a front perspective view of a standard linear valve cage;
FIG. 4 is a front perspective view of an example adjustable capacity valve cage;
FIG. 5 is a front view of the valve cage of Fig. 4; and
FIG. 6 is a cross-sectional view of the valve cage of Fig. 5 taken along line 6-6.

### DETAILED DESCRIPTION

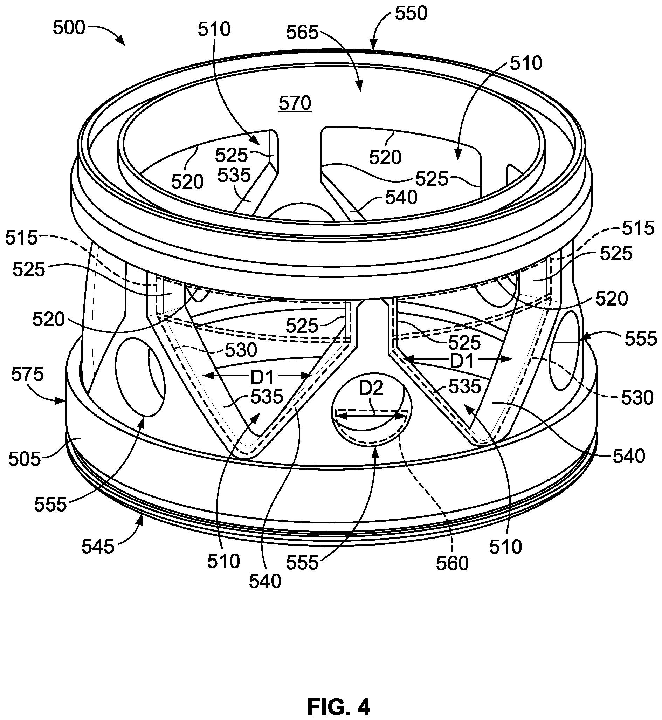

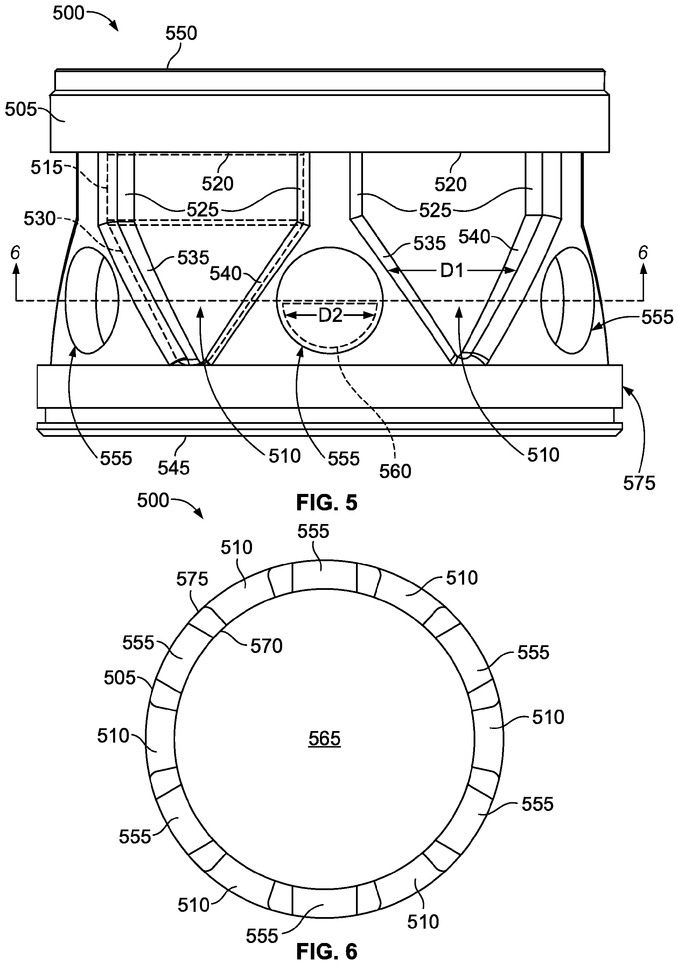

Referring to Figs. 4-6, one example of a high capacity linear valve cage 500 is shown that can be used as valve cage 130 of control valve 100. High capacity linear valve cage 500 provides a stable initial fluid flow, much like linear valve cage 400, and also a higher capacity initial fluid flow, similar to high flow valve cage 300. The geometry of valve cage 500 allows it to be modified in increase the flow area while still maintaining stability. In addition, valve cage 500 can be tuned or custom tailored to meet specific flow requirements for individual applications.

Like linear valve cage 400, valve cage 500 is cylindrical and generally includes a circumferential wall 505 forming a hollow central bore 565, within which valve plug 135 can slide to control fluid flow through valve cage 500. Circumferential wall 505 defines a top end 550, an opposing bottom end 545, an inner surface 570, and an opposing outer surface 575. First passages 510 are formed through wall 505, extend between inner surface 570 and outer surface 575, and each have an upper portion 515 and a lower portion 530.

Upper portion 515 of first passages 510 is defined by a top wall 520 and a pair of opposing, parallel, generally vertical sides walls 525, such that upper portion 515 is generally rectangular. Lower portion 530 of first passages 510 is tapered in a direction from the top end 550 of circumferential wall 505 to the bottom end 545 of circumferential wall 505, away from the upper portion 515, and is defined by first and second lower walls 535, 540, which are non-parallel and are angled toward each other such that the distance D1 between first and second lower walls 535, 540 decreases as the distance from upper portion 515 increases. In other words, the distance D1 between first and second lower walls 535, 540 is smallest adjacent bottom end 545 of valve cage 500 and increases as first and second lower walls 535, 540 extend toward side walls 525 or toward top end 550 of valve cage 500. Because of the changing distance D1 between first and second lower walls 535, 540 of lower portion 530 of first passages 510, a smaller initial fluid flow is allowed to pass through first passages 510 as valve plug 135 moves from the closed position to a position that opens first passages 510. As valve plug 135 continues to move further and a greater portion of first passages 510 is opened, the changing distance D1 between first and second lower walls 535, 540 of lower portion 530 allows greater fluid flow through first passages 510 as valve plug 135 moves further from valve seat 125.. This lower initial fluid flow and gradual increase of fluid flow as valve plug 135 moves provides a more stable fluid flow through valve cage 500. Alternatively, rather than having a rectangular upper portion 515 and an angular lower portion 530, first passages 510 can have any geometric shape and/or size as desired for a particular application. However, the shape of first passages 510 should be such that the width, and therefore area for fluid flow, increases from proximate bottom end 545 of valve cage 500 toward top end 550 of valve cage.

In addition, valve cage 500 also has second passages 555, which are positioned between adjacent lower portions 530 of first passages 510, preferably between first and second lower walls 535, 540 of adjacent first passages 510. Preferably, as with first passages 510, second passages 555 have a lower section 560 that is tapered in a direction from the top end 550 of the circumferential wall 505 to the bottom end 545 of the circumferential wall 505 with opposing walls that are a distance D2 apart and the distance D2 decreases as the distance from top end 550 increases. In other words, the distance D2 is preferably smallest proximate bottom end 545 and increases toward top end 550. As with first passages 510, due to the changing distance D2 in lower section 560 of second passages 555, a smaller initial fluid flow is allowed to pass through second passages 555 as valve plug 135 moves from the closed position to a position that opens second passages 555. As valve plug 135 continues to move further and a greater portion of second passages 555 is opened, the changing distance D2 allows greater fluid flow through second passages 555.

In the example shown, second passages 555 are generally circular. However, rather than having a circular cross-section, second passages 555 can have any geometric shape and/or size as desired for a particular application, such as square, rectangle, triangle, oval, star, polygon, and irregular shapes. However, the shape of second passages 555 should preferably have a width, and therefore area for fluid flow, that increases from proximate bottom end 545 of valve cage 500 toward top end 550 of valve cage.

Having both first passages 510 and second passages 555 in valve cage 500 allows for an increased initial fluid flow through valve cage 500 as valve plug 135 starts to move from the closed position, which can decrease the pressure buildup in control valve 100 that could be encountered using linear valve cage 400 for the same application. In addition, the tapered shape of both first and second passages 510, 555 (having a smaller area at the bottom and large at the top) allows the fluid flow through valve cage 500 to increase gradually as valve plug moves from the fully closed to the fully open position, which provides a more stable fluid flow through valve cage 500 than that encountered using high flow valve cage 300 for the same application.

In addition, valve cage 500 can be easily modified and/or customized to specific requirements by changing the size and/or shape of second passages 555, which directly affects the flow output of control valve 100.

If requirements are predetermined, valve cage 500 can be manufactured using standard machining techniques or using Additive Manufacturing Technology, such as direct metal laser sintering, full melt powder bed fusion, etc. Using Additive Manufacturing Technology could allow first and second passages 510, 555 to be manufactured with complex shapes and flow paths. In Additive Manufacturing Technology, the 3-dimensional design of valve cage 500 can be divided into multiple layers, for example layers approximately 20-50 microns thick. A powder bed, such as a powder based metal, is then laid down representing the first layer of the design and a laser or electron beam sinters together the design of the first layer. A second powder bed, representing the second layer of the design, is then laid down over the first sintered layer and the second layer is sintered together. This continues layer after layer to form the completed valve cage 500. Using an Additive Manufacturing Technology process to manufacture cages for control valves allows the freedom to produce passages having various shapes and geometries that are not possible using current standard casting or drilling techniques.

In addition, if a control valve using a linear valve cage 400 is encountering issues with pressure buildup, the valve cage can be modified using standard machining techniques to meet specific requirements with the addition of specific second passages 555 that are tuned to the meet the requirements.

While various embodiments have been described above, this disclosure is not intended to be limited thereto. Variations can be made to the disclosed embodiments that are still within the scope of the appended claims.

## Claims

1. A cage for a control valve, the cage comprising:
a circumferential wall (505) having an inner surface (570) and an outer surface (575);
a plurality of first passages (510) formed through the circumferential wall (505) and extending between the inner surface (570) and the outer surface (575), each of the plurality of first passages (510) including an upper portion (515) and a lower portion (530), wherein the upper portion (515) of each of the plurality of first passages (510) is rectangular being defined by an upper wall (520) and a pair of opposing, parallel vertical side walls (525), and the lower portion (530) is tapered in a direction away from the upper portion (515); and
a plurality of second passages (555) formed through the circumferential wall (505) and extending between the inner surface (570) and the outer surface (575), each of the plurality of second passages (555) having a circular shape and including an upper portion and a lower portion (560), wherein the lower portion (560) of each of the plurality of second passages (555) is tapered in a direction away from the upper portion, one of the plurality of second passages (555) is positioned between each pair of adjacent lower portions of the first passages (510), **characterized in that** the entirety of each of the second passages (555) is positioned circumferentially and vertically between adjacent lower portions of the first passages (510).

2. The cage of claim 1, wherein the lower portion (530) of each of the plurality of first passages (510) includes first and second lower walls (535, 540) that are non-parallel and angled toward each other.

3. The cage of any of the preceding claims 1 or 2, wherein each of the plurality of second passages (555) includes opposing walls and a distance (D2) between the opposing walls decreases as the distance from the upper portion increases.

4. A control valve including the cage of claim 1, the control valve comprising:
a valve body (105) having an inlet (110) and an outlet (115);
a valve seat (125) positioned in a passageway (120) of the valve body (105) between the inlet (110) and the outlet (115); and
a valve plug (135) positioned within the valve body (105) and movable between a closed position, in which the valve plug (135) sealingly engages the valve seat (125), and an open position, in which the valve plug (135) is spaced away from the valve seat (125); wherein
the valve cage (500) is disposed within the valve body (105) adjacent the valve seat (125) and proximate the valve plug (135) to provide guidance for the valve plug (135).

5. The control valve of claim 4, wherein the lower portion (530) of each of the plurality of first passages (510) includes first and second lower walls (535, 540) that are non-parallel and angled toward each other.

6. The control valve of claim 5, wherein a distance (D1) between the first and second lower walls (535, 540) decreases as a distance from the upper portion (515) of the first passages (510) increases such that a greater fluid flow is allowed through the first passages (510) as the valve plug (135) moves further from the valve seat (125).

7. The control valve of any of the preceding claims, wherein each of the plurality of second passages (555) includes opposing walls and a distance (D2) between the opposing walls decreases as the distance from the upper portion of the second passages (555) increases such that a greater fluid flow is allowed through the second passages (555) as the valve plug (135) moves further from the valve seat (125).

8. A fluid regulator including the control valve of claim 4, the fluid regulator comprising:
an actuator (200); and
the control valve (100) operatively connected to the actuator (200).

9. The fluid regulator of claim 8, wherein the lower portion (530) of each of the plurality of first passages (510) includes first and second lower walls (535, 540) that are non-parallel and angled toward each other.

10. The fluid regulator of claim 7, wherein a distance (D1) between the first and second lower walls (535, 540) decreases as a distance from the upper portion (515) of the first passages (510) increases such that a greater fluid flow is allowed through the first passages (510) as the valve plug (135) moves further from the valve seat (125).

11. The fluid regulator of any of the preceding claims 8 to 10, wherein each of the plurality of second passages (555) includes opposing walls and a distance (D2) between the opposing walls decreases as the distance from the upper portion of the second passages (555) increases such that a greater fluid flow is allowed through the second passages (555) as the valve plug (135) moves further from the valve seat (125).

## Patentansprüche

1. Käfig für ein Regelventil, wobei der Käfig umfasst:
eine umlaufende Wand (505), welche eine Innenfläche (570) und eine Außenfläche (575) aufweist;
eine Vielzahl an ersten Durchgängen (510), die durch die umlaufende Wand (505) hindurch ausgebildet sind und sich zwischen der Innenfläche (570) und der Außenfläche (575) erstrecken, wobei jeder von der Vielzahl an ersten Durchgängen (510) einen oberen Abschnitt (515) und einen unteren Abschnitt (530) einschließt, wobei der obere Abschnitt (515) von jedem von der Vielzahl an ersten Durchgängen (510) rechteckig ist und durch eine obere Wand (520) und ein Paar sich gegenüberliegender, paralleler vertikaler Seitenwände (525) definiert wird,
und der untere Abschnitt (530) in eine Richtung weg von dem oberen Abschnitt (515) verjüngt ist; und
eine Vielzahl an zweiten Durchgängen (555), die durch die umlaufende Wand (505) hindurch ausgebildet sind und sich zwischen der Innenfläche (570) und der Außenfläche (575) erstrecken, wobei jeder von der Vielzahl an zweiten Durchgängen (555) eine Kreisform aufweist und einen oberen Abschnitt und einen unteren Abschnitt (560) einschließt, wobei der untere Abschnitt (560) von jedem von der Vielzahl an zweiten Durchgängen (555) in eine von Richtung weg dem oberen Abschnitt verjüngt ist, und einer von der Vielzahl an zweiten Durchgängen (555) zwischen jedem Paar benachbarter unterer Abschnitte der ersten Durchgänge (510) angeordnet ist, **dadurch gekennzeichnet, dass** sämtliche zweite Durchgänge (555) jeweils umlaufend und vertikal zwischen benachbarten unteren Abschnitten der ersten Durchgänge (510) angeordnet sind.

2. Käfig gemäß Anspruch 1, wobei der untere Abschnitt (530) von jedem von der Vielzahl an ersten Durchgängen (510) erste und zweite untere Wände (535, 540) einschließt, die nicht parallel und abgewinkelt voneinander vorliegen.

3. Käfig gemäß irgendeinem der vorhergehenden Ansprüche 1 oder 2, wobei jeder von der Vielzahl an zweiten Durchgängen (555) sich gegenüberliegende Wände einschließt, und ein Abstand (D2) zwischen den sich gegenüberliegenden Wänden mit zunehmendem Abstand von dem oberen Abschnitt abnimmt.

4. Regelventil, welches den Käfig gemäß Anspruch 1 einschließt, wobei das Regelventil umfasst:
einen Ventilkörper (105), welcher einen Eingang (110) und einen Ausgang (115) aufweist;
einen Ventilsitz (125), der in einem Durchgang (120) des Ventilkörpers (105) zwischen dem Eingang (110) und dem Ausgang (115) angeordnet ist; und
einen Ventilkegel (135), der im Inneren des Ventilkörpers (105) angeordnet ist und zwischen einer geschlossenen Position, in der der Ventilkegel (135) abdichtend in den Ventilsitz (125) eingreift, und einer offenen Position, in der der Ventilkegel (135) im Abstand von dem Ventilsitz (125) vorliegt, beweglich ist, wobei
der Ventilkäfig (500) im Inneren des Ventilkörpers (105) angrenzend an den Ventilsitz (125) und in unmittelbarer Nähe des Ventilkegels (135) angeordnet ist, um Führung für den Ventilkegel (135) bereitzustellen.

5. Regelventil gemäß Anspruch 4, wobei der untere Abschnitt (530) von jedem von der Vielzahl an ersten Durchgängen (510) erste und zweite untere Wände (535, 540) einschließt, die nicht parallel und abgewinkelt voneinander vorliegen.

6. Regelventil gemäß Anspruch 5, wobei ein Abstand (D1) zwischen den ersten und zweiten unteren Wänden (535, 540) mit zunehmendem Abstand von dem oberen Abschnitt (515) der ersten Durchgänge (510) abnimmt, so dass ein größerer Fluidfluss durch die ersten Durchgänge (510) ermöglicht wird, wenn sich der Ventilkegel (135) weiter von dem Ventilsitz (125) wegbewegt.

7. Regelventil gemäß irgendeinem der vorhergehenden Ansprüche, wobei jeder von der Vielzahl an zweiten Durchgängen (555) sich gegenüberliegende Wände einschließt, und ein Abstand (D2) zwischen den sich gegenüberliegenden Wänden mit zunehmendem Abstand von dem oberen Abschnitt der zweiten Durchgänge (555) abnimmt, so dass ein größerer Fluidfluss durch die zweiten Durchgänge (555) ermöglicht wird, wenn sich der Ventilkegel (135) weiter von dem Ventilsitz (125) wegbewegt.

8. Fluidregler, welcher das Regelventil gemäß Anspruch 4 einschließt, wobei der Fluidregler umfasst:
einen Aktuator (200); und
das Regelventil (100), welches operativ mit dem Aktuator (200) verbunden ist.

9. Fluidregler gemäß Anspruch 8, wobei der untere Abschnitt (530) von jedem von der Vielzahl an ersten Durchgängen (510) erste und zweite untere Wände (535, 540) einschließt, die nicht parallel und abgewinkelt voneinander vorliegen.

10. Fluidregler gemäß Anspruch 7, wobei ein Abstand (D1) zwischen den ersten und zweiten unteren Wänden (535, 540) mit zunehmendem Abstand von dem oberen Abschnitt (515) der ersten Durchgänge (510) abnimmt, so dass ein größerer Fluidfluss durch die ersten Durchgänge (510) ermöglicht wird, wenn sich der Ventilkegel (135) weiter von dem Ventilsitz (125) wegbewegt.

11. Fluidregler gemäß irgendeinem der vorhergehenden Ansprüche 8 bis 10, wobei jeder von der Vielzahl an zweiten Durchgängen (555) sich gegenüberliegende Wände einschließt, und ein Abstand (D2) zwischen den sich gegenüberliegenden Wänden mit zunehmendem Abstand von dem oberen Abschnitt der zweiten Durchgänge (555) abnimmt, so dass ein größerer Fluidfluss durch die zweiten Durchgänge (555) ermöglicht wird, wenn sich der Ventilkegel (135) weiter von dem Ventilsitz (125) wegbewegt.

## Revendications

1. Cage pour vanne de commande, la cage comprenant :
une paroi circonférentielle (505) ayant une surface intérieure (570) et une surface extérieure (575) ;
une pluralité de premiers passages (510) formés à travers la paroi circonférentielle (505) et s'étendant entre la surface intérieure (570) et la surface extérieure (575), chacun de la pluralité de premiers passages (510) comprenant une partie supérieure (515) et une partie inférieure (530), dans laquelle la partie supérieure (515) de chacun de la pluralité de premiers passages (510) est rectangulaire en étant définie par une paroi supérieure (520) et une paire de parois latérales verticales parallèles opposées (525), et la partie inférieure (530) est effilée dans une direction s'éloignant de la partie supérieure (515) ; et
une pluralité de seconds passages (555) formés à travers la paroi circonférentielle (505) et s'étendant entre la surface intérieure (570) et la surface extérieure (575), chacun de la pluralité de seconds passages (555) ayant une forme circulaire et comprenant un partie supérieure et une partie inférieure (560), dans laquelle la partie inférieure (560) de chacun de la pluralité de seconds passages (555) est effilée dans une direction s'éloignant de la partie supérieure, l'un de la pluralité de seconds passages (555) est positionné entre chaque paire de parties inférieures adjacentes des premiers passages (510), **caractérisée en ce que** la totalité de chacun des seconds passages (555) est positionnée circonférentiellement et verticalement entre des parties inférieures adjacentes des premiers passages (510).

2. Cage selon la revendication 1, dans laquelle la partie inférieure (530) de chacun de la pluralité de premiers passages (510) comprend des première et seconde parois inférieures (535, 540) qui sont non-parallèles et inclinées l'une vers l'autre.

3. Cage selon l'une quelconque des revendications précédentes 1 ou 2, dans laquelle chacun de la pluralité de seconds passages (555) comprend des parois opposées et une distance (D2) entre les parois opposées diminue à mesure que la distance par rapport à la partie supérieure augmente.

4. Vanne de commande comprenant la cage selon la revendication 1, la vanne de commande comprenant :
un corps de vanne (105) ayant une entrée (110) et une sortie (115) ;
un siège de vanne (125) positionné dans un passage (120) du corps de vanne (105) entre l'entrée (110) et la sortie (115) ; et
un clapet de vanne (135) positionné à l'intérieur du corps de vanne (105) et mobile entre une position fermée, dans laquelle le clapet de vanne (135) vient en prise de manière étanche avec le siège de vanne (125), et une position ouverte, dans laquelle le clapet de vanne (135) est écarté du siège de vanne (125) ; dans laquelle
la cage de vanne (500) est disposée à l'intérieur du corps de vanne (105) à proximité adjacente du siège de vanne (125) et à proximité du clapet de vanne (135) pour permettre une guidage du clapet de vanne (135).

5. Vanne de commande selon la revendication 4, dans laquelle la partie inférieure (530) de chacun de la pluralité de premiers passages (510) comprend des première et seconde parois inférieures (535, 540) qui sont non-parallèles et inclinées l'une vers l'autre.

6. Vanne de commande selon la revendication 5, dans laquelle une distance (Dl) entre les première et seconde parois inférieures (535, 540) diminue à mesure qu'une distance par rapport à la partie supérieure (515) des premiers passages (510) augmente de sorte qu'un plus grand écoulement de fluide est autorisé à travers les premiers passages (510) lorsque le clapet de vanne (135) s'éloigne davantage du siège de vanne (125).

7. Vanne de commande selon l'une quelconque des revendications précédentes, dans laquelle chacun de la pluralité de seconds passages (555) comprend des parois opposées et une distance (D2) entre les parois opposées diminue à mesure que la distance par rapport à la partie supérieure des seconds passages (555) augmente de sorte qu'un plus grand écoulement de fluide est autorisé à travers les seconds passages (555) lorsque le clapet de vanne (135) s'éloigne davantage du siège de vanne (125).

8. Régulateur de fluide comprenant la vanne de commande selon la revendication 4, le régulateur de fluide comprenant :
un actionneur (200) ; et
la vanne de commande (100) connectée de manière opérationnelle à l'actionneur (200).

9. Régulateur de fluide selon la revendication 8, dans lequel la partie inférieure (530) de chacun de la pluralité de premiers passages (510) comprend des première et seconde parois inférieures (535, 540) qui sont non-parallèles et inclinées l'une vers l'autre.

10. Régulateur de fluide selon la revendication 7, dans lequel une distance (D1) entre les première et seconde parois inférieures (535, 540) diminuent à mesure qu'une distance par rapport à la partie supérieure (515) des premiers passages (510) augmente de sorte qu'un plus grand écoulement de fluide est autorisé à travers les premiers passages (510) lorsque le clapet de vanne (135) s'éloigne davantage du siège de vanne (125).

11. Régulateur de fluide selon l'une quelconque des revendications précédentes 8 à 10, dans lequel chacun de la pluralité de seconds passages (555) comprend des parois opposées et une distance (D2) entre les parois opposées diminue à mesure que la distance à partir de la partie supérieure des seconds passages (555) augmente de sorte qu'un plus grand écoulement de fluide est autorisé à travers les seconds passages (555) lorsque le clapet de vanne (135) s'éloigne davantage du siège de vanne (125).
